# EUROPÄISCHE PATENTSCHRIFT

(11) **EP 1 138 996 B1**
(45) Veröffentlichungstag und Bekanntmachung des Hinweises auf die Patenterteilung: **16.02.2005**
(21) Anmeldenummer: 01810031.3
(22) Anmeldetag: 12.01.2001
(51) Int. Cl.: F16L 3/123, F16L 55/033, F16L 59/02

(54) **Isolierelement für Rohre**
Insulation element for pipes
Elément isolant pour tuyaux

(30) Priorität: 27.03.2000 EP 00810259
(43) Veröffentlichungstag der Anmeldung: 04.10.2001
(73) Patentinhaber: Aeroflex International Co., Ltd., Teparak Muang, Samutprakarn 10270 (TH)
(72) Erfinder: Vitoorapakorn, Pawat, Samutprakarn 10270 (TH)
(74) Vertreter: Rottmann, Maximilian R.

(56) Entgegenhaltungen:
- WO-A-98/13636
- DE-U- 8 911 479
- US-A- 3 563 503

## Beschreibung

Die Erfindung betrifft ein Isolierelement für Rohre.

Die Problematik beim Aufhängen oder Abstützen von thermisch isolierten Rohren besteht darin, dass die herkömmlichen Isolationen keine genügende Festigkeit aufweisen, damit Rohrschellen zum Aufhängen oder Abstützen des Rohres daran befestigt werden können. Daher werden die Rohrschellen im allgemeinen direkt am Rohr selber befestigt. Dies wiederum bedingt, dass die Rohrschellen nachträglich isoliert werden müssen, damit keine unerwünschten Kälte- bzw. Wärmebrücken entstehen. Es versteht sich, dass das nachträgliche Isolieren von Rohrschellen einen erheblichen Aufwand mit sich bringt.

Aus der EP 0 503 566 ist ein Rohrisolierstück für eine Aufhängung oder Abstützung einer kälteisolierten Rohrleitung bekannt. Dieses Rohrisolierstück besteht im wesentlichen aus zwei Hohlzylinderhalbschalen, welche mit einem eingesetzten Ringsegment aus druckfestem, thermisch isolierenden Hartschaum versehen sind. Dieses Ringelement erstreckt sich über ein bis drei Viertel des Aussenumfangs der zugehörigen Hohlzylinderhalbschale. Der übrige Teil des Rohrisolierstücks besteht aus Weichschaum. Die Aussenhaut des Rohrisolierstücks wird durch ein Metallblech gebildet, welches gleichzeitig als Rohrschelle ausgebildet ist.

Im weiteren ist aus der GB 2 283 798 A ein Isolationslement bekannt, das zwei Hohlzylinderhalbschalen aufweist. Die beiden Hohlzylinderhalbschalen sind von je einem elastischen Belag vollständig umgeben. Zum axialen Abdichten der beiden Hohlzylinderhalbschalen sind diese endseitig mit Silikondichtungen versehen. Auf der Aussenseite ist das Isolationslement mit einem Abdeckband versehen, welches die beiden Hohlzylinderhalbschalen gelenkig miteinander verbindet. Das Abdeckband überlappt die eine Hohlzylinderhalbschale derart, dass eine Lasche gebildet wird, die dem Fixieren der beiden Hohlzylinderhalbschalen dient. Durch die vollständige Ummantelung der beiden Hohlzylinderhalbschalen soll sichergestellt werden, dass das die jeweilige Hohlzylinderhalbschale bildende Isoliermatieral gegenüber der Umgebung, in der es eingesetzt wird, hermetisch abgedichtet ist.

Ein grundsätzlicher Nachteil von mit flexiblen Abschnitten versehenen Rohrisolierstücken zur Bildung eines Aufhängungs- oder Abstützungsabschnitts besteht darin, dass diese unter der Einwirkung von äusseren Kräften, wie sie beispielsweise bei der Anwendung von Rohrschellen entstehen, nachgiebig sind, was zumeist dazu führt, dass diese zusammengedrückt werden und keine genügend stabile Abstützung des zu isolierenden Rohres erreicht werden kann.

Die Aufgabe der vorliegenden Erfindung besteht darin, ein Isolierelement vorzuschlagen, welches eine sichere und stabile Aufhängung des Rohres ermöglicht und vibrationsdämpfend wirkt, wobei das Isolierelement einfach herzustellen und problemlos in der Handhabung sein soll und ausserdem einen guten Schutz gegen das radiale Eindringen bzw. Austreten von Feuchtigkeit und/oder Dampf bietet.

Diese Aufgabe wird durch die im Anspruch 1 angeführten Merkmale gelöst.

Indem beide Hohlzylinderhalbschalen aus einem formstabilen Material gefertigt sind, wird eine sichere und stabile Aufhängung des Rohres ermöglicht. Beispielsweise wird das Isolierelement bei der Verwendung einer Rohrschelle nur minimal zusammengedrückt, ganz im Gegensatz zu Isolierelementen, die mit weichen, nachgiebigen Abschnitten versehen sind. Der auf der Innenseite der Hohlzylinderhalbschalen angeordnete, elastische Belag wirkt vibrationsdämpfend und ausserdem können gewisse Toleranzen in bezug auf den Durchmesser des zu isolierenden Rohres ausgeglichen werden, so dass kein unerwünschter Spalt zwischen der inneren Mantelfläche der Hohlzylinderhalbschalen und dem entsprechenden Rohr besteht. Indem sich der elastische Belag über zumindest eine der der jeweils anderen Hohlzylinderhalbschale zuzuwendenden Stirnfläche erstreckt wird sichergestellt, dass die beiden einander gegenüberliegenden Stirnflächen vollflächig aneinander zu liegen kommen und einen guten Schutz vor dem Eindringen bzw. Austreten von Feuchtigkeit und Dampf bieten. Zudem werden die beiden Hohlzylinderhalbschalen durch das sich über die Aussenseiten der beiden Hohlzylinderhalbschalen erstreckende, flexible Band gelenkig derart miteinander verbunden, dass die beiden Hohlzylinderhalbschalen auf der anderen Seite zumindest soweit aufspreizbar sind, dass das Isolierelement auf das zu isolierende Rohr aufschiebbar ist. Dieses Band erstreckt sich auf der aufspreizbaren Seite in Form einer Zunge über die eine Hohlzylinderhalbschale und den dazwischen liegenden Schlitz hinaus. Vorzugsweise ist diese Zunge auf der Innenseite mit einer Klebschicht versehen. Dieses Band begünstigt eine einfache Handhabung des Isolierelements. Ausserdem wirkt es zusammen mit der den Schlitz überdeckenden Zunge als äussere Dampf- und Feuchtigkeitssperre.

Die geschilderte Ausbildung des Isolierelements lässt sich schnell und einfach an einem Rohr anbringen. Dazu wird der Schlitz des Isolierelements bis auf den Aussendurchmesser des zu isolierenden Rohres aufgeweitet, so dass das Isolierelement radial auf das Rohr aufgeschoben werden kann.

Bevorzugte Ausführungsformen des Erfindungsgegenstands sind in den abhängigen Ansprüchen 2 bis 9 aufgeführt.

Nachfolgend wird ein Ausführungsbeispiel der Erfindung anhand einer Zeichnung näher erläutert.

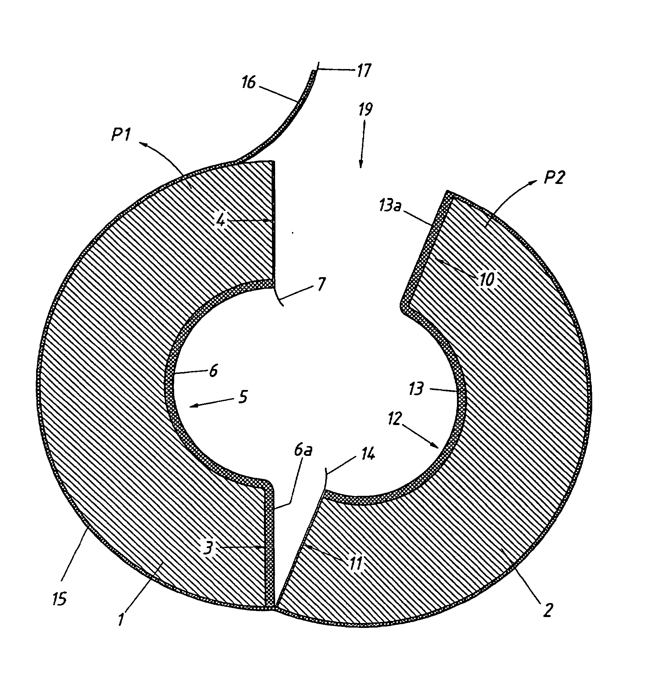

Aus der einzigen Figur ist das im wesentlichen durch zwei Hohlzylinderhalbschalen 1, 2 gebildete Isolierelement ersichtlich. Die beiden kongruent ausgebildeten Hohlzylinderhatbschalen 1, 2 sind aus einem formstabilen und thermisch isolierenden Material wie beispielsweise einem hartgeschäumten Polyurethan gefertigt. Die Aussenseite der beiden Hohlzylinderhalbschalen 1, 2 ist vorzugsweise mit einem glatten Überzug oder einer ungeschäumten, eine glatte Oberfläche aufweisenden Randschicht versehen. Die dem zu isolierenden Rohr (nicht dargestellt) zuzuwendende innere Mantelfläche 5, 12 der jeweiligen Hohlzylinderhalbschale 1, 2 ist mit einem elastischen Belag 6, 13 versehen, welcher vibrationsdämpfende Eigenschaften aufweist und vorzugsweise kompressionselastisch ausgebildet ist. Dieser Belag 6, 13 erstreckt sich bei beiden Hohlzylinderhalbschalen 1, 2 nebst der inneren Mantelfläche 5, 12 auch über jeweils die eine der beiden Stirnflächen 3, 10, wobei sich der über die jeweilige Stirnfläche 3, 10 hinweg erstreckende Bereich des Belags mit dem Bezugseichen 6a, bzw. 13a bezeichnet ist. Die andere Stirnfläche 4, 11 der jeweiligen Hohlzylinderhalbschale 1, 2 ist mit einer selbstklebenden Oberfläche versehen, die von einer entfernbaren Abdeckfolie 7, 14 abgedeckt ist.

Auf der Aussenseite der beiden Hohlzylinderhalbschalen 1, 2 ist ein biegeelastisches jedoch zugfestes Band 15 angeordnet, welches die beiden Hohlzylinderhalbschalen 1, 2 auf der einen, im vorliegenden Fall unteren Seite gelenkig derart miteinander verbindet, dass die beiden das Isolierelement bildenden Hohlzylinderhalbschalen 1, 2 auf der anderen, oberen Seite in Richtung der beiden Pfeile P1, P2 zumindest soweit aufspreizbar sind, dass ein Schlitz 19 entsteht, über welchen das Isolierelement radial auf das entsprechende Rohr aufschiebbar ist. Der mit 16 bezeichnete Teil des Bandes 15 erstreckt sich in Form einer Zunge um einige Zentimeter über die Stirnseite 4 der linken Hohlzylinderhalbschale 1 und den zwischen den beiden Hohlzylinderhalbschalen bestehenden Schlitz 19 hinweg. Auf der Innenseite ist die Zunge 16 mit einer selbstklebenden Oberfläche versehen, die von einer entfernbaren Abdeckfolie 17 überdeckt ist. Vorzugsweise sind sowohl das Band 15 wie auch der jeweilige Belag 6, 13 aus einem geschlossenzelligen und nicht hygroskopisch wirkenden synthetischen Kautschuk gefertigt.

Üblicherweise werden die beiden die Stirnflächen 4, 11 bedeckenden Abdeckfolien 7, 14 entfernt bevor das Isolierelement auf das Rohr aufgeschoben wird, so dass die beiden Hohlzylinderhalbschalen 1, 2 unmittelbar nach dem Aufschieben auf das Rohr an den Stirnseiten zu einem geschlossenen Hohlzylinder verklebt werden können. Danach kann die Abdeckfolie 17 an der Zunge 16 entfernt und an der Aussenseite der rechten Hohlzylinderhalbschale 2 fixiert werden, so dass sich das Band 15 nun auf der aufspreizbaren Seite über den Schlitz 19 hinweg erstreckt und als äussere Dampf- und Feuchtigkeitssperre wirkt.

Zur Abstützung oder zum Aufhängen des Rohres mittels des Isolierelements werden üblicherweise aus Metall bestehende Rohrschellen (nicht dargestellt) verwendet, welche in bekannter Weise an der Aussenseite des Isolierelements angebracht und fixiert werden. Durch das äussere Trägerband 15 und insbesondere den inneren Belag 6, 13 wird dabei sichergestellt, dass die Rohrschelle gegenüber dem Rohr weitgehend vibrationsgedämpft ist und dass über das Isolierelement keine Vibrationen vom Rohr an die Aufhängung und umgekehrt weitergeleitet werden.

Da beide Hohlzylinderhalbschalen 1, 2 aus einem formstabilen Material gefertigt sind, werden diese von der Rohrschelle nicht zusammengedrückt. Lediglich der zwischen den beiden Stirnflächen 3, 10 angeordnete Belag 6a, 13a wird unter der Krafteinwirkung einer Rohrschelle zusammengedrückt, was jedoch insofern gewollt ist, da dadurch sichergestellt werden kann, dass die beiden einander gegenüberliegenden Stirnflächen der beiden Hohlzylinderhalbschalen 1, 2 vollflächig aneinander zu liegen kommen und so einen guten Schutz vor dem Eindringen von Feuchtigkeit bieten. Die Seitenflächen der Hohlzylinderhalbschalen 1, 2 sind vorzugsweise versiegelt, wodurch das Eindringen von Feuchtigkeit verhindert und das Anbringen von Klebstoff zum Verkleben mit angrenzenden Rohrisolationselementen begünstigt wird.

Zur Fertigung des Belags 6, 13 wie auch des Trägerbandes 15 kommen nebst synthetischem Kautschuk auch Thermoplaste in Frage, wobei grundsätzlich sowohl organische wie auch anorganische Materialien verwendet werden können.

Das gezeigte Ausführungsbeispiel eines Isolierelements kann sehr schnell und einfach an einem Rohr angebracht werden. Nebst einer soliden Abstützung und einer einfachen Handhabung hat das Isolierelement den Vorteil, dass es vibrationsdämpfend wirkt. Ausserdem kann es bestimmte Toleranzen in bezug auf allfällige Abweichungen des Rohraussendurchmessers ausgleichen und auch das Eindringen bzw. Austreten von Dampf und Feuchtigkeit wird zuverlässig verhindert. Schliesslich begünstigt die kongruente Ausbildung der beiden Hohlzylinderhalbschalen 1, 2 eine kostengünstige Fertigung des Isolierelements.

Es versteht sich, dass das vorgängige Ausführungsbeispiel keinesfalls als abschliessend zu betrachten ist. So könnte sich eine andere Ausführungsvariante des Isolierelements beispielsweise dadurch auszeichnen, dass sich der Belag 6, 13 bei beiden Hohlzylinderhalbschalen 1, 2 über beide Stirnflächen 3, 4; 10, 11 hinweg erstreckt. Bei einer nochmals anderen Ausführungsvariante könnte sich der Belag auch nur bei einer Hohlzylinderhalbschale 1 über beide Stirnflächen 3, 4 hinweg erstrecken, währenddem er sich bei der anderen Hohlzylinderhalbschale 2 nur über deren innere Mantelfläche 12 hinweg erstreckt. Wichtig ist lediglich, dass zumindest jeweils die eine von einander gegenüberliegenden Stirnflächen 4, 10; 3, 11 mit einem Belag versehen ist.

## Patentansprüche

1. Isolierelement für Rohre zur Bildung eines Aufhängungs- oder Abstützungsabschnitts, mit zwei zusammenfügbaren Hohlzylinderhalbschalen (1, 2), die aus einem formstabilen, thermisch isolierenden Material gefertigt sind, wobei die dem zu isolierenden Rohr zuzuwendende innere Mantelfläche (5, 12) der jeweiligen Hohlzylinderhalbschale (1, 12) mit einem elastischen Belag (6, 13) versehen ist, der sich über zumindest eine der der jeweils anderen Hohlzylinderhalbschale (1, 2) zuzuwendenden Stirnfläche (3, 10) erstreckt, und wobei ein sich über die Aussenseiten der beiden Hohlzylinderhalbschalen (1, 2) erstreckendes, direkt auf der jeweiligen Hohlzylinderhalbschale (1, 2) angebrachtes Band (15) vorgesehen ist, welches die beiden Hohlzylinderhalbschalen (1, 2) einseitig gelenkig derart miteinander verbindet, dass die beiden Hohlzylinderhalbschalen (1, 2) auf der anderen Seite zumindest soweit aufspreizbar sind, dass das Isolierelement radial auf das zu isolierende Rohr aufschiebbar ist, und wobei sich das Band (15) auf der aufspreizbaren Seite in Form einer Zunge (16) über den zwischen den beiden Hohlzylinderhalbschalen (1, 2) bestehenden Schlitz (19) hinaus erstreckt und eine Klebschicht zum Fixieren der Zunge (16) vorgesehen ist.

2. Isolierelement nach Anspruch 1, **dadurch gekennzeichnet, dass** das Band (15) zugfest jedoch biegeelastisch ausgebildet ist und eine geschlossene Zellstruktur aufweist.

3. Isolierelement nach einem der vorhergehenden Ansprüche, **dadurch gekennzeichnet, dass** der Belag (6, 13) eine geschlossene Zellstruktur aufweist.

4. Isolierelement nach einem der vorhergehenden Ansprüche, **dadurch gekennzeichnet, dass** der Belag (6, 13) vibrationsdämpfende Eigenschaften aufweist und vorzugsweise kompressionselastisch ausgebildet ist.

5. Isolierelement nach einem der vorhergehenden Ansprüche, **dadurch gekennzeichnet, dass** die beiden Hohlzylinderhalbschalen (1, 2) kongruent ausgebildet sind.

6. Isolierelement nach einem der vorhergehenden Ansprüche, **dadurch gekennzeichnet, dass** sich der Belag (6, 6a; 13, 13a) jeweils über die innere Mantelfläche (5, 12) und die eine Stirnfläche (3, 10) einer Hohlzylinderhalbschale (1, 2) erstreckt, während die andere Stirnfläche (4, 11) mit einer selbstklebenden Oberfläche versehen ist, wobei die beiden Hohlzylinderhalbschalen (1, 2) derart angeordnet sind, dass jeweils die mit einer selbstklebenden Oberfläche versehene Stirnfläche (4, 11) der einen Hohlzylinderhalbschale (1; 2) dem Belag (13a, 6a) der anderen Hohlzylinderhalbschale (2; 1) zugewandt ist.

7. Isolierelement nach einem der vorhergehenden Ansprüche, **dadurch gekennzeichnet, dass** die beiden Hohlzylinderhalbschalen (1, 2) aus einem hartgeschäumten Polyurethan gefertigt sind.

8. Isolierelement nach einem der Ansprüche 2 bis 7, **dadurch gekennzeichnet, dass** die dem umlaufenden Band (15) zugewandte Aussenseite der beiden Hohlzylinderhalbschalen (1, 2) mit einem glatten Überzug oder einer ungeschäumten Randschicht versehen sind.

9. Isolierelement nach einem der vorhergehenden Ansprüche, **dadurch gekennzeichnet, dass** die Seitenflächen der Hohlzylinderhalbschalen (1, 2) versiegelt sind.

## Claims

1. Insulating element for pipes for forming a suspension or support portion, with two hollow-cylindrical half-shells (1, 2) which can be joined together and are made from a dimensionally stable, thermally insulating material, the inner lateral surface (5, 12), intended to face the pipe to be insulated, of each hollow-cylindrical half-shell (1, 2) being provided with an elastic covering (6, 13) which extends over at least one of the end surfaces (3, 10) intended to face the other hollow-cylindrical half-shell (1, 2) in each case, and a band (15) being provided, which extends over the outer sides of the two hollow-cylindrical half-shells (1, 2), is applied directly on each hollow-cylindrical half-shell (1, 2) and interconnects the two hollow-cylindrical half-shells (1, 2) in an articulated manner on one side in such a way that the two hollow-cylindrical half-shells (1, 2) can on the other side be spread apart at least to such an extent that the insulating element can be pushed radially onto the pipe to be insulated, and the band (15) extending, on the side which can be spread apart, in the form of a tongue (16) beyond the slit (19) present between the two hollow-cylindrical half-shells (1, 2), and an adhesive layer for fixing the tongue (16) being provided.

2. Insulating element according to Claim 1, **characterized in that** the band (15) is of tensionproof but flexible design and has a closed cell structure.

3. Insulating element according to one of the preceding claims, **characterized in that** the covering (6, 13) has a closed cell structure.

4. Insulating element according to one of the preceding claims, **characterized in that** the covering (6, 13) has vibration-damping properties and is preferably of compression-elastic design.

5. Insulating element according to one of the preceding claims, **characterized in that** the two hollow-cylindrical half-shells (1, 2) are of congruent design.

6. Insulating element according to one of the preceding claims, **characterized in that** the covering (6, 6a; 13, 13a) extends in each case over the inner lateral surface (5, 12) and one end surface (3, 10) of a hollow-cylindrical half-shell (1, 2), while the other end surface (4, 11) is provided with a self-adhesive surface, the two hollow-cylindrical half-shells (1, 2) being arranged in such a way that in each case the end surface (4, 11) provided with a self-adhesive surface of one hollow-cylindrical half-shell (1; 2) faces the covering (13a, 6a) of the other hollow-cylindrical half-shell (2; 1).

7. Insulating element according to one of the preceding claims, **characterized in that** the two hollow-cylindrical half-shells (1, 2) are made from a hard-foamed polyurethane.

8. Insulating element according to one of Claims 2 to 7, **characterized in that** the outer side, facing the band (15) running around it, of the two hollow-cylindrical half-shells (1, 2) is provided with a smooth coating or an unfoamed boundary layer.

9. Insulating element according to one of the preceding claims, **characterized in that** the side surfaces of the hollow-cylindrical half-shells (1, 2) are sealed.

## Revendications

1. Elément isolant pour tuyaux en vue de former une section de suspension ou d'appui, avec deux demi-coquilles de cylindre creux pouvant être réunies (1, 2), qui sont fabriquées à partir d'un matériau indéformable thermiquement isolant, sachant que la nappe (5, 12) intérieure devant être tournée vers le tuyau à isoler de chaque demi-coquille de cylindre creux (1, 2) est pourvue d'une garniture élastique (6, 13) qui s'étend au moins sur une des surfaces frontales (3, 10) devant être tournée vers respectivement l'autre demi-coquille de cylindre creux (1, 2), et sachant qu'il est prévu un cordon (15) placé directement sur la demi-coquille respective de cylindre creux et s'étendant sur les extérieurs des deux demi-coquilles de cylindre creux (1, 2), lequel cordon relie d'un côté de manière articulée les deux demi-coquilles de cylindre creux (1, 2) de telle sorte que les deux demi-coquilles de cylindre creux (1, 2) peuvent s'écarter sur l'autre côté au moins au point de pouvoir faire glisser radialement l'élément isolant sur le tuyau à isoler, et sachant que le cordon (15) du côté pouvant s'écarter s'étend sous la forme d'une languette (16) sur la fente (19) existante entre les deux demi-coquilles de cylindre creux (1, 2), et qu'une couche adhésive est prévue pour fixer la languette (16).

2. Elément isolant selon la revendication 1, **caractérisé en ce que** le cordon (15) est réalisé de manière résistante à la traction mais élastique à la flexion et comporte une structure cellulaire fermée.

3. Elément isolant selon l'une des revendications précédentes, **caractérisé en ce que** la garniture (6, 13) comporte une structure cellulaire fermée.

4. Elément isolant selon l'une des revendications précédentes, **caractérisé en ce que** la garniture (6, 13) comporte des propriétés amortissant les vibrations et est de préférence réalisée de manière élastique à la compression.

5. Elément isolant selon l'une des revendications précédentes, **caractérisé en ce que** les deux demi-coquilles de cylindre creux (1, 2) sont réalisées de manière congruente.

6. Elément isolant selon l'une des revendications précédentes, **caractérisé en ce que** la garniture (6, 6a, 13, 13a) s'étend respectivement sur la nappe intérieure (5, 12) et sur l'une des surfaces frontales (3, 10) d'une demi-coquille de cylindre creux (1, 2) tandis que l'autre surface frontale (4, 11) est pourvue d'une surface autocollante, sachant que les deux demi-coquilles de cylindre creux (1, 2) sont disposées de telle sorte que la surface frontale (4, 11) d'une des demi-coquilles de cylindre creux (1, 2), pourvue d'une surface autocollante est respectivement tournée vers la garniture (13a, 6a) de l'autre demi-coquille de cylindre creux (2, 1).

7. Elément isolant selon l'une des revendications précédentes, **caractérisé en ce que** les deux demi-coquilles de cylindre creux (1, 2) sont fabriquées à partir d'un polyuréthanne en mousse durcie.

8. Elément isolant selon l'une des revendications 2 à 7, **caractérisé en ce que** l'extérieur tourné vers le cordon circulaire (15) des deux demi-coquilles de cylindre creux (1, 2) est pourvu d'un revêtement lisse ou d'une couche marginale non moussée.

9. Elément isolant selon l'une des revendications précédentes, **caractérisé en ce que** les surfaces latérales des demi-coquilles de cylindre creux (1, 2) sont scellées.
